# EUROPEAN PATENT APPLICATION

(11) **EP 4 826 787 A1**
(43) Date of publication of application: **21.10.2026**
(21) Application number: 24904310.0
(22) Date of filing: 16.12.2024
(51) Int. Cl.: H01M 4/38, C01B 33/02, H01M 4/134, H01M 4/02

(54) **NEGATIVE ELECTRODE ACTIVE MATERIAL, NEGATIVE ELECTRODE INCLUDING SAME, AND METHOD FOR MANUFACTURING NEGATIVE ELECTRODE ACTIVE MATERIAL**

(30) Priority: 15.12.2023 KR 20230183925
(71) Applicant: POSCO Holdings Inc., Pohang-si, Gyeongsangbuk-do 37859 (KR)
(72) Inventor: KIM, Jin-Won, Pohang-si, Gyeongsangbuk-do 37877 (KR); KANG, Eun-Tae, Pohang-si, Gyeongsangbuk-do 37877 (KR); KIM, Dae-Hyun, Pohang-si, Gyeongsangbuk-do 37877 (KR); CHOI, Su-Kang, Pohang-si, Gyeongsangbuk-do 37877 (KR); JO, Hyun-Chul, Pohang-si, Gyeongsangbuk-do 37877 (KR)
(74) Representative: Pfenning, Meinig & Partner mbB
(86) International application number: PCT/KR2024/020380
(87) International publication number: WO 2025/127745

(57) **Abstract**

Provided, according to exemplary embodiments of the present invention, is a negative electrode active material capable of improving the efficiency of a secondary battery. The negative electrode active material comprises: a carbon scaffold having a porous structure; and silicon-based particles distributed in pores of the carbon scaffold, wherein the carbon scaffold comprises a plurality of carbon structures which are agglomerated with each other. Provided, according to other exemplary embodiments of the present invention, are a method for manufacturing the above-described negative electrode active material, and a negative electrode comprising the negative electrode active material.

## Description

### Technical Field

The present disclosure relates to an anode active material and an anode including the same.

In addition, the present disclosure relates to a method for manufacturing an anode active material.

### Background Art

Recently, as electronic devices have rapidly become more portable and wireless, there has been an increasing demand for secondary batteries that are small, lightweight, and have high energy density as a power source for driving such devices. Furthermore, high power characteristics, long-term durability, and safety are also required for small-scale consumer applications as well as large-scale secondary batteries, such as those for power storage systems and electric vehicle applications.

A secondary battery has a structure in which an electrode assembly, including a cathode, an anode, and a separator disposed between the cathode and the anode, and an electrolyte are housed in an exterior case. The electrode includes an electrode current collector and an electrode active material layer located on at least one side of the electrode current collector. Specifically, the cathode includes a cathode current collector and a cathode active material layer located on at least one surface of the cathode current collector. The anode includes an anode current collector and an anode active material layer located on at least one surface of the anode current collector.

Secondary batteries can be classified into lead-acid batteries, nickel (Ni)-cadmium (Cd) batteries, nickel (Ni)-metal hydride (MH) batteries, and lithium batteries, depending on the type of anode active material and cathode active material. Among these, the demand for lithium secondary batteries, which are excellent in terms of energy density, power characteristics, and operating time, is increasing.

The secondary battery reaction of a lithium secondary battery occurs through a chemical reaction in which lithium ions (Li⁺) move between the cathode active material and the anode active material.

In this secondary battery field, the efficiency related to the charge/discharge capacity of a secondary battery is a property directly linked to the long-term performance of devices that use the secondary battery as a power source, and thus much research is ongoing.

(Patent Document 1) Korean Patent Publication No. 10-1825919

### Disclosure of Invention

### Technical Problem

An object of the present disclosure is to provide an anode active material capable of improving the charge/discharge capacity and efficiency of a secondary battery, and an anode including the same.

Another object of the present disclosure is to provide a method for manufacturing the above-described anode active material.

The objects of the present disclosure are not limited to the matters described above. Additional objects of the present disclosure are described throughout the specification, and a person skilled in the art to which the present disclosure pertains will have no difficulty in understanding the additional objects of the present disclosure from the contents described in the specification of the present disclosure.

### Solution to Problem

According to exemplary embodiments of the present disclosure, an anode active material is provided. The anode active material includes a carbon scaffold having a porous structure; and silicon-based particles distributed in pores of the carbon scaffold, wherein the carbon scaffold includes a plurality of carbon structures agglomerated with each other.

The carbon structure may be any one of a linear carbon structure, a planar carbon structure, a ball-type carbon structure, and a combination thereof.

A content of the planar carbon structure may be higher than a content of the linear carbon structure.

The linear carbon structure may include any one of a carbon nanotube, a carbon nanofiber, and a combination thereof.

The planar carbon structure may include graphene.

The anode active material may have a D₅₀ of 0.5 to 20.0 µm.

The anode active material may have a D₅₀ of 3 to 15 µm.

The carbon scaffold may have a specific surface area of 300 to 500 m²/g.

The carbon scaffold may have a pore volume of 0.8 to 2.0 cm²/g.

The carbon scaffold may have an average pore size (width) of 2 to 8 nm.

The silicon-based particles may be characterized by being deposited in the pores of the carbon scaffold.

It may further include a coating layer provided on a surface of the carbon scaffold.

According to another exemplary embodiment of the present disclosure, a method for manufacturing an anode active material is provided. The method for manufacturing an anode active material includes: preparing a carbon slurry in which carbon structures are dispersed in a solvent; obtaining a carbon scaffold having a porous structure by spray-drying the carbon slurry; and providing silicon to the carbon scaffold.

The providing of the silicon may be performed by depositing a silicon-based precursor fluid in pores of the carbon scaffold at 400 to 900°C.

The carbon structure may be any one of a linear carbon structure, a planar carbon structure, a ball-type carbon structure, and a combination thereof.

The method for manufacturing an anode active material may further include providing a coating layer on a surface of the carbon scaffold after depositing the silicon-based precursor fluid.

According to still another exemplary embodiment of the present disclosure, an anode is provided. The anode may include: an anode current collector; and an anode active material layer including the above-described anode active material and located on one surface or both surfaces of the anode current collector.

### Advantageous Effects of Invention

The anode active material according to exemplary embodiments of the present disclosure can improve the efficiency of an anode and a secondary battery including the same by providing an anode active material including a carbon scaffold structure with improved initial efficiency.

A secondary battery according to another exemplary embodiment of the present disclosure provides a method for manufacturing an anode active material capable of forming a carbon scaffold structure at a relatively low temperature. As a result, the manufacturing efficiency of the anode active material can be improved.

Various and beneficial advantages and effects in the present disclosure are not limited to the above description, and may be more readily understood in the course of describing specific embodiments of the present disclosure.

### Brief Description of Drawings

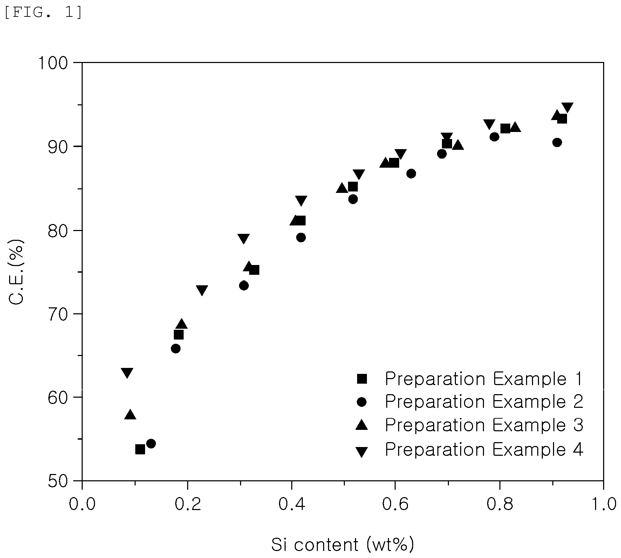

FIG. 1 is a graph showing the efficiency of a secondary battery for each silicon content.

### Best Mode for the Invention

Hereinafter, preferred embodiments of the present disclosure will be described in detail with reference to the accompanying drawings. Prior to this, the terms or words used in the specification and claims should not be construed as being limited to ordinary or dictionary meanings, and should be construed as having meanings and concepts consistent with the technical idea of the present disclosure, based on the principle that the inventor can appropriately define the concept of terms to describe his or her own invention in the best way.

Hereinafter, when describing with reference to the drawings, the same or corresponding components will be given the same reference numerals, and redundant descriptions thereof will be omitted.

In the following embodiments, terms such as first and second are used for the purpose of distinguishing one component from another, not for a limiting meaning.

In the following embodiments, a singular expression includes a plural expression unless the context clearly indicates otherwise.

In the following embodiments, terms such as "comprise", "include" or "have" mean that a feature or component described in the specification exists, and do not preclude the possibility that one or more other features or components may be added.

In the drawings, the size of components may be exaggerated or reduced for convenience of description. For example, since the size and thickness of each component shown in the drawings are arbitrarily shown for convenience of description, the present disclosure is not necessarily limited to what is shown.

If an embodiment can be implemented differently, a specific process sequence may be performed differently from the described sequence. For example, two processes described in succession may be performed substantially simultaneously, or may be performed in the reverse order of the described sequence.

In addition, in describing the present disclosure, when it is determined that a detailed description of a related known configuration or function may obscure the gist of the present disclosure, the detailed description thereof will be omitted.

In the present disclosure, having a micro-scale size is based on D₅₀ in the particle size distribution of particles. That is, it means a case where D₅₀ is 1.0 µm or more. Therefore, even if the D₁₀ of a certain particle is smaller than 1.0 µm, if the D₅₀ of the particle is 1.0 µm or more, it can be interpreted that the particle has a micro-scale size according to the present disclosure.

In the present disclosure, D₅₀, D₁₀, and D₉₀ can be defined as particle diameters corresponding to 50%, 10%, and 90% of the cumulative volume, respectively, in the particle size distribution curve of particles. The D₅₀, D₁₀, and D₉₀ can be measured, for example, using a laser diffraction method. The laser diffraction method is generally capable of measuring particle diameters from the submicron region to several mm, and can obtain results with high reproducibility and high resolution.

Hereinafter, an anode and an anode active material according to exemplary embodiments of the present disclosure will be described in detail.

### [Anode]

According to exemplary embodiments, an anode may include an anode current collector and an anode active material layer.

The anode current collector is not particularly limited as long as it has high conductivity without causing a chemical change in the battery. As a non-limiting example, the anode current collector may include one or more selected from copper, stainless steel, aluminum, nickel, titanium, calcined carbon, copper or stainless steel on surface-treated with carbon, nickel, titanium, silver, or the like, and an aluminum-cadmium alloy.

The thickness of the anode current collector may be 3 to 500 µm.

The anode active material layer may be provided on one surface or both surfaces of the anode current collector. The anode active material layer may be obtained by coating and drying an anode slurry including a binder, a conductive agent, and an anode active material on the anode current collector.

According to exemplary embodiments, the binder may be included in an amount of 30 wt% or less (including 0 wt%) by weight.

The binder is a component that assists in the bonding between the anode active material and the current collector. As a non-limiting example, the anode binder may include one or more selected from polyvinyl alcohol, carboxymethyl cellulose/styrene-butadiene rubber, hydroxypropyl cellulose, diacetylene cellulose, polyvinyl chloride, polyvinylpyrrolidone, polytetrafluoroethylene, polyvinylidene fluoride, polyethylene, or polypropylene.

According to exemplary embodiments, the conductive agent may be included in an amount of 30 wt% or less (including 0 wt%) by weight.

The conductive agent is a component for improving the conductivity of the anode active material. As a non-limiting example, the conductive agent may include one or more selected from: graphite such as carbon nanotubes, natural graphite, artificial graphite or the like; carbon black such as acetylene black, Ketjen black, channel black, furnace black, lamp black, thermal black or the like; conductive fibers such as carbon fibers, metal fibers or the like; metal powders such as fluorocarbon, aluminum, nickel powder or the like; conductive whiskers such as zinc oxide, potassium titanate or the like; conductive metal oxides such as titanium oxide; and conductive materials such as polyphenylene derivatives or the like.

### [Anode Active Material]

The anode active material can generate electrical energy through insertion and deinsertion reactions of lithium ions during the charging and discharging process of a secondary battery.

According to exemplary embodiments, the anode active material may have a D₅₀ of 0.5 to 20.0 µm. More specifically, the anode active material may have a D₅₀ of 3 to 15 µm. The anode active material may have a D₅₀ of 3 to 10 µm.

The anode active material may include a carbon scaffold with a porous structure and silicon-based particles.

The carbon scaffold with a porous structure may be one in which a plurality of carbon structures are agglomerated with each other.

Conventionally, a carbon scaffold formed by carbonizing a polymer was used. Alternatively, a carbon scaffold was manufactured based on activated carbon heat-treated at a very high temperature. However, when a polymer is carbonized, there is a problem in that the yield is poor because the carbonization rate of the polymer is only about 20 to 40% of the initial polymer weight. In addition, since the conventional carbon scaffold had poor initial capacity and efficiency, there was a problem in that the initial capacity and efficiency of an anode active material or an anode manufactured based on a conventional method were lowered.

However, the carbon scaffold according to exemplary embodiments of the present disclosure is provided in a form in which carbon structures are entangled or bonded to each other and agglomerated. As a result, a high-temperature heat treatment process is not essentially required, so the energy required for manufacturing the anode active material can be reduced. In addition, since the carbon scaffold in the form of agglomerated carbon structures has excellent initial capacity and efficiency, the initial capacity and efficiency of an anode active material or an anode manufactured based on the conventional method can be improved.

According to exemplary embodiments, the carbon structure may be any one of a linear carbon structure, a planar carbon structure, a ball-type carbon structure, and a combination thereof. More specifically, the carbon structure may be one or more of a linear carbon structure, a planar carbon structure, and a combination thereof.

The linear carbon structure may be any one of a carbon nanotube, a carbon nanofiber, and a combination thereof. When agglomerated, the linear carbon structures form an entangled structure and can more strongly fix the carbon scaffold structure. As a result, the structural stability of the anode active material can be improved.

The planar carbon structure may include graphene. The planar carbon structure may have more excellent charge capacity and discharge capacity. As a result, the electrochemical efficiency of the carbon scaffold can be further improved.

According to exemplary embodiments, in the carbon scaffold, the content of the planar carbon structure may be higher than the content of the linear carbon structure. More specifically, the linear carbon structure can contribute to the structural stability of the carbon scaffold and is relatively cheaper than the planar carbon structure. However, since the electrical properties of the planar carbon structure are superior to those of the linear carbon structure, the content of the planar carbon structure may be higher than the content of the linear carbon structure in terms of the efficiency of the secondary battery.

The ball-type carbon structure may include fullerene.

According to exemplary embodiments, the carbon scaffold may have a specific surface area of 300 to 600 m²/g. If the specific surface area of the carbon scaffold is excessively low, its own capacity may be lowered. More specifically, the capacity of the secondary battery may be lowered because the silicon-based particles cannot properly bond with the carbon scaffold. However, if the specific surface area of the carbon scaffold is excessively high, the specific surface area of the anode active material increases, which may cause side reactions with the electrolyte during the charging and discharging process of the secondary battery. In this case, the cycle life properties of the secondary battery may be deteriorated.

According to exemplary embodiments, the carbon scaffold may have a pore volume of 0.8 to 2.0 cm²/g. The carbon scaffold may have an average pore size (width) of 2 to 8 nm. If the pore volume and pore size of such a carbon scaffold are excessively small, the charge storage capacity may be lowered. In addition, the capacity of the secondary battery may be lowered because the silicon-based particles cannot properly bond to the carbon scaffold. However, if the pore volume and pore size of the carbon scaffold become excessively large, side reactions with the electrolyte may occur during the charging and discharging process of the secondary battery.

The specific surface area, pore volume, and average pore size of the carbon scaffold can be measured by techniques known in the art, but as a non-limiting example, they can be measured or calculated by one or more of the BET method or the BJH method.

According to exemplary embodiments, a coating layer provided on the surface of the carbon scaffold may be further included. The coating layer can cover the carbon scaffold structure to prevent the porous structure of the carbon scaffold from being exposed to the outside.

As a non-limiting example, the coating layer may include any one of carbon, an ion-conductive polymer, a ceramic, an organic compound, and a combination thereof.

More specifically, the carbon may be provided on the surface of the carbon scaffold by using a thermal decomposition method or a chemical vapor deposition method on a coating layer precursor fluid including any one of a coal-based pitch, a petroleum-based pitch, coal tar, methane, propane, butane, cyclohexane, ethane, propylene, acetylene, and a combination thereof. The ion-conductive polymer may include one or more of: an oligomer of any one of a polyaniline-based, a polypyrrole-based, a polythiophene-based, and a combination thereof; PEDOT-PSS; polyvinylidene fluoride (PVDF); and a rubber including any one of vinylene, fluoride, neoprene, urethane, silicone, styrene-butadiene, isoprene, and a combination thereof. The ceramic may include any one of alumina, titania, zirconia, chromium oxide, a carbide-based material, a nitride-based material, a boride, a silicide, and a combination thereof. The organic compound may include any one of lignin, cellulose, chitosan, a polysaccharide, a lipid, and a combination thereof.

The silicon-based particles may be distributed in the pores of the carbon scaffold. More specifically, the silicon-based particles may be deposited in the pores of the carbon scaffold. As a result, the silicon-based particles can be stably entrapped in the pores of the carbon scaffold and may not be easily detached from the carbon scaffold. In addition, when deposited in the internal pores of the carbon scaffold by a deposition method, it is easier to improve the capacity of the secondary battery because a high content of silicon with a high capacity can be included.

As a non-limiting example, the silicon-based particles may include amorphous silicon. Amorphous silicon has lower volume expansion than crystalline silicon. Therefore, by depositing amorphous silicon in the pores of the carbon scaffold, the capacity of the secondary battery can be improved and at the same time, the cycle life property can also be enhanced. As a result, the efficiency of the secondary battery can be improved.

### [Method for Manufacturing Anode Active Material]

A method for manufacturing an anode active material may include preparing a carbon slurry, obtaining a carbon scaffold, and providing silicon. In addition, the method for manufacturing an anode active material may further include providing a coating layer on a surface of the carbon scaffold.

The preparing of the carbon slurry may be performed by dispersing carbon structures in a solvent. That is, the carbon slurry may include carbon structures.

The carbon structure may be any one of a linear carbon structure, a planar carbon structure, a ball-type carbon structure, and a combination thereof. More specifically, the carbon structure may be any one of a linear carbon structure, a planar carbon structure, a ball-type carbon structure, and a combination thereof.

The linear carbon structure may include any one of a carbon nanotube, a carbon nanofiber, and a combination thereof. The planar carbon structure may include any one of graphene, graphite, and a combination thereof. The ball-type carbon structure may include fullerene.

The solvent may be any one of an organic solvent, water and one or more water-miscible solvents, and a combination thereof. As a non-limiting example, the organic solvent may be any one of ethanol, methanol, isopropanol, and a combination thereof.

A dispersant may be added to the solvent. According to exemplary embodiments, the dispersant may be any one of a cellulose-based, an acrylic-based, a styrene-based, a fatty acid-based, an ester wax-based, a polyvinyl acrylic (PVA)-based, and a combination thereof.

The obtaining of the carbon scaffold may be performed by spray-drying the above-described carbon slurry. As a result, a carbon scaffold with a porous structure can be obtained.

As described above, conventionally, in order to obtain a carbon scaffold, a polymer containing carbon was carbonized, or activated carbon heat-treated at a high temperature was used. However, in this case, there was a problem that not only the capacity and efficiency of the manufactured carbon scaffold were poor, but also the yield of the carbon scaffold was excessively low.

However, according to exemplary embodiments, since a carbon scaffold can be provided by agglomerating carbon structures by a spray-drying method, the yield of the carbon scaffold can be increased and production efficiency can be improved.

The spray-drying method may be performed by spraying a carbon slurry into a spray dryer to atomize particles, and providing hot air into the spray dryer to evaporate the solvent of the carbon slurry, thereby obtaining a dried powder.

According to exemplary embodiments, the inlet temperature of the spray dryer may be 60 to 150°C. If the inlet temperature of the spray dryer is less than 60°C, the solvent may not evaporate sufficiently. In addition, the carbon scaffold particles may become entangled with each other, and the particle size of the carbon scaffold may become very large. If the inlet temperature of the spray dryer exceeds 150°C, it may be difficult to control the shape of the carbon scaffold. In addition, the carbon structures may not become entangled with each other and may be scattered in individual particle units, making it difficult to form the structure of the carbon scaffold.

According to exemplary embodiments, the internal temperature of the spray dryer may be 90 to 200°C.

According to exemplary embodiments, the outlet temperature of the spray dryer may be 70 to 180°C. The outlet temperature of the spray dryer may be equal to or lower than the internal temperature of the spray dryer. The outlet temperature of the spray dryer may be equal to or higher than the inlet temperature of the spray dryer.

If the outlet temperature of the spray dryer is excessively low, the solvent of the carbon slurry may not be sufficiently removed, making it difficult to control the particle size of the carbon scaffold. If the outlet temperature of the spray dryer is excessively high, the solvent of the carbon slurry may be removed too quickly during the transfer of the carbon slurry, which may block the inlet of the spray dryer.

The transfer speed of the carbon slurry may be 10 to 50 cc/min. As a non-limiting example, the spray dryer may be any one of a nozzle type, a disk type, and a combination thereof.

The providing of the silicon may be performed by providing and depositing a silicon precursor fluid in pores of the carbon scaffold at a predetermined temperature.

The silicon precursor fluid is not particularly limited as long as it is a fluid that includes silicon and can be deposited on the carbon scaffold. As a non-limiting example, the silicon precursor fluid may be any one of silane including an alkyl moiety, disilane, trisilane, tetrasilane, chlorosilane, dichlorosilane, trichlorosilane, and tetrachlorosilane, and a combination thereof. More specifically, the silane including an alkyl moiety may be any one of methylsilane, dimethylsilane, trimethylsilane, tetramethylsilane, methyldisilane, dimethyldisilane, trimethyldisilane, tetramethyldisilane, hexamethylsilane, and a combination thereof.

According to exemplary embodiments, the deposition of the silicon precursor fluid may be performed through Chemical Vapor Deposition (CVD). More specifically, the deposition of the silicon precursor fluid may be performed by one or more of plasma-enhanced chemical vapor deposition (PECVD), microwave-assisted chemical vapor deposition (Microwave-assisted CVD), and chemical vapor infiltration (CVI).

According to exemplary embodiments, the deposition of the silicon precursor fluid may be performed in a temperature range of 400 to 900°C. If the deposition temperature is too low, the silicon precursor fluid may not properly diffuse into the internal pores of the carbon scaffold. In addition, the silicon precursor fluid may be deposited in a precursor fluid state without being decomposed. In this case, the efficiency of the secondary battery may be lowered. However, if the deposition temperature is excessively high, it may be deposited on the carbon scaffold in the form of crystalline silicon rather than amorphous silicon. In addition, the deposited silicon-based particles may agglomerate with each other to form coarse particles. This may cause a decrease in the capacity of the secondary battery.

The providing of a coating layer on the surface of the carbon scaffold may be performed by carrying out any one of a thermal decomposition method, a chemical vapor deposition method, and a combination thereof, to provide the coating layer on the surface of the carbon scaffold from a coating layer precursor.

As a non-limiting example, the coating layer precursor may include any one of a carbon precursor, an ion-conductive precursor, a ceramic precursor, an organic compound precursor, and a combination thereof.

More specifically, the carbon precursor may include any one of a coal-based pitch, a petroleum-based pitch, coal tar, methane, propane, butane, cyclohexane, ethane, propylene, acetylene, and a combination thereof. The ion-conductive precursor may include one or more of: an oligomer of any one of a polyaniline-based, a polypyrrole-based, a polythiophene-based, and a combination thereof; PEDOT-PSS; polyvinylidene fluoride (PVDF); and a rubber including any one of vinylene, fluoride, neoprene, urethane, silicone, styrene-butadiene, isoprene, and a combination thereof. The ceramic precursor may include any one of alumina, titania, zirconia, chromium oxide, a carbide-based material, a nitride-based material, a boride, a silicide, and a combination thereof. The organic compound precursor may include any one of lignin, cellulose, chitosan, a polysaccharide, a lipid, and a combination thereof.

### Mode for the Invention

Hereinafter, embodiments of the present disclosure will be described in detail so that a person of ordinary skill in the art to which the present disclosure pertains can easily carry them out. However, the present disclosure may be embodied in many different forms and is not limited to the embodiments described herein.

### (Example 1)

A carbon slurry was prepared by mixing carbon nanotubes and a dispersant in anhydrous ethanol. The dispersant was included in an amount of 10 parts by weight per 100 parts by weight of anhydrous ethanol. The carbon nanotubes were included in an amount of 10 parts by weight per 100 parts by weight of anhydrous ethanol. As a result, the carbon scaffold was substantially composed only of carbon nanotubes. Thereafter, the carbon slurry was spray-dried under conditions of an inlet temperature of 70°C, a transfer speed of the carbon slurry of 20 to 30 cc/min, and an internal temperature of 120°C to obtain a carbon scaffold. At this time, a nozzle-type spray dryer was used as the spray dryer. Thereafter, silane gas was deposited in the pores of the carbon scaffold by a CVD method to obtain an anode active material.

### (Example 2)

A carbon slurry was prepared by mixing carbon nanotubes and graphene in a solvent. At this time, the carbon nanotube content of the carbon scaffold was controlled to be 80 wt% by weight. The graphene content of the carbon scaffold was controlled to be 20 wt% by weight. Other than that, the same procedure as in Example 1 described above was performed to obtain an anode active material.

### (Example 3)

A carbon slurry was prepared by mixing carbon nanotubes and graphene in a solvent. At this time, the carbon nanotube content of the carbon scaffold was controlled to be 50% wt by weight. The graphene content of the carbon scaffold was controlled to be 50 wt% by weight. Other than that, the same procedure as in Example 1 described above was performed to obtain an anode active material.

### (Example 4)

A carbon slurry was prepared by mixing graphene in a solvent. As a result, the carbon scaffold was substantially composed only of graphene. Other than that, the same procedure as in Example 1 described above was performed to obtain an anode active material.

### (Comparative Example 1)

5 ml of resorcinol and 100 ml of formaldehyde were mixed, and the mixture was stirred for 15 minutes to obtain a uniform reaction mixture. In addition, 0.9 ml of ammonium hydroxide and 50 ml of deionized water were added to this solution for gelation. The sol was kept at 80°C for 2 hours for gelation. After gelation, the wet gel was immersed in acetone for 5 hours at 40°C for solvent exchange. Then, the wet gel was subjected to a drying process to obtain an RF aerogel. The drying was performed at 80°C for 5 hours and at 150°C for 2 hours. The RF aerogel thus obtained was carbonized by heating in an inert atmosphere at 100, 200, and 400°C for one hour each, and finally at 800°C for 3 hours to obtain a carbon scaffold. Other than that, the same procedure as in Example 1 described above was performed to obtain an anode active material.

### Experimental Example 1: Measurement of Electrochemical Initial Capacity and Efficiency of Carbon Scaffold Itself

Before silicon deposition, the electrochemical initial capacity and efficiency of the carbon scaffold itself were measured using the carbon scaffolds according to the Examples and Comparative Example as an anode active material. More specifically, an anode was manufactured so that the ratio of anode active material:binder was 7:3. At this time, the carbon scaffolds according to the Examples and Comparative Example described above were used as the anode active material. Polyacrylic acid (PAA) was used as the binder. A secondary battery (2032 Coin Half Cell) was manufactured using the manufactured anode. At this time, lithium metal was used as a counter electrode.

The charge capacity and discharge capacity of the manufactured secondary batteries were measured under the condition of a 0.1C rate (1C=2500mA/gC), and the charge/discharge efficiency was calculated and shown in Table 1 below. The charge/discharge efficiency was calculated as the ratio of the discharge capacity to the charge capacity (discharge capacity/charge capacity).

**[Table 1]**

| Classification | Charge/Discharge Efficiency (%) |
|---|---|
| Example 1 | 25.8 |
| Example 2 | 33.9 |
| Example 3 | 38.3 |
| Example 4 | 43.8 |
| Comparative Example 1 | 22.2 |

Referring to Table 1, it was confirmed that the charge/discharge efficiency of the carbon scaffold itself according to the Examples, which was formed by agglomerating carbon structures, was superior to that of the Comparative Example, in which a polymer was carbonized. In addition, it was confirmed that as the graphene content increased, the charge/discharge efficiency of the carbon scaffold itself increased.

### (Preparation Example 1)

An anode was manufactured using the anode active material according to Example 1 described above. Polyacrylic acid (PAA) was used as a binder required for manufacturing the anode. Super C65 (Timcal) was used as a conductive agent. At this time, the ratio of anode active material : binder : conductive agent was controlled to be 6:3:1. Thereafter, a secondary battery (2032 Coin Half Cell) was manufactured using the manufactured anode.

### (Preparation Example 2)

A secondary battery was manufactured in the same manner as in Preparation Example 1 described above, except that the anode active material according to Example 2 was used.

### (Preparation Example 3)

A secondary battery was manufactured in the same manner as in Preparation Example 1 described above, except that the anode active material according to Example 3 was used.

### (Preparation Example 4)

A secondary battery was manufactured in the same manner as in Preparation Example 1 described above, except that the anode active material according to Example 4 was used.

### Test Example 2: Initial Efficiency by Silicon Deposition Amount

The efficiency of the secondary batteries according to the Preparation Examples described above was measured for each silicon deposition amount. More specifically, in the Examples described above, a plurality of anode active materials were manufactured by varying the deposition amount during silicon deposition. Thereafter, secondary batteries were manufactured in the same manner as in the Preparation Examples described above.

The efficiency of the secondary batteries was measured by performing charging and discharging on each of the secondary batteries according to the Preparation Examples described above to measure the charge capacity and discharge capacity. Thereafter, the charge/discharge efficiency was calculated using the measured charge capacity and discharge capacity.

Charging of the secondary batteries was performed under the control of 0.5C, 0.5mV CC-CV, and a cut-off current of 0.005C. CC-CV means a constant current-constant voltage charging method.

Discharging of the secondary batteries was performed under the control of 0.5C and a cut-off voltage of 1.0V.

In this experimental example, a 1C rate was defined as 2,500 mAh/gSi, and after calculating the current, charging and discharging were performed at 0.5C according to the weight (g) of Si (active material) of the electrode.

FIG. 1 is a graph showing the efficiency of a secondary battery for each silicon content.

Referring to FIG. 1, it was confirmed that as the silicon deposition amount increased, the charge/discharge efficiency (C.E.%) of the secondary battery increased. The charge/discharge efficiency of the secondary battery shows a similar tendency to the charge/discharge efficiency of the carbon scaffold itself. That is, as the content of graphene in the anode active material increased, the charge/discharge efficiency of the secondary battery increased. Therefore, it is determined that when using a polymer-derived carbon scaffold, which had a lower charge/discharge efficiency than a carbon scaffold manufactured using carbon structures, the charge/discharge efficiency of the secondary battery will also be poor. Consequently, it was confirmed that the efficiency of the secondary battery can be improved by enhancing the efficiency of the carbon scaffold itself.

The present disclosure has been described in more detail above with reference to the drawings, examples, and the like. However, the configurations described in the drawings, examples, etc. described in this specification are only one embodiment of the present disclosure and do not represent all of the technical ideas of the present disclosure, and therefore, it should be understood that there may be various equivalents and modifications that can replace them at the time of filing of the present application.

## Claims

1. An anode active material, comprising:
a carbon scaffold having a porous structure; and
silicon-based particles distributed in pores of the carbon scaffold,
wherein the carbon scaffold comprises a plurality of carbon structures agglomerated with each other.

2. The anode active material of claim 1,
wherein the carbon structure is any one of a linear carbon structure, a planar carbon structure, a ball-type carbon structure, and a combination thereof.

3. The anode active material of claim 2,
wherein a content of the planar carbon structure is higher than a content of the linear carbon structure.

4. The anode active material of claim 2,
wherein the linear carbon structure comprises any one of a carbon nanotube, a carbon nanofiber, and a combination thereof.

5. The anode active material of claim 2,
wherein the planar carbon structure comprises graphene.

6. The anode active material of claim 1,
wherein the anode active material has a D₅₀ of 0.5 to 20.0 µm.

7. The anode active material of claim 6,
wherein the anode active material has a D₅₀ of 3 to 15 µm.

8. The anode active material of claim 1,
wherein the carbon scaffold has a specific surface area of 300 to 500 m²/g.

9. The anode active material of claim 1,
wherein the carbon scaffold has a pore volume of 0.8 to 2.0 cm²/g.

10. The anode active material of claim 1,
wherein the carbon scaffold has an average pore size (width) of 2 to 8 nm.

11. The anode active material of claim 1,
wherein the silicon-based particles are deposited in the pores of the carbon scaffold.

12. The anode active material of claim 1,
further comprising a coating layer provided on a surface of the carbon scaffold.

13. A method for manufacturing an anode active material, the method comprising:
preparing a carbon slurry in which carbon structures are dispersed in a solvent;
obtaining a carbon scaffold having a porous structure by spray-drying the carbon slurry; and
providing silicon to the carbon scaffold.

14. The method of claim 13,
wherein the providing of the silicon is performed by depositing a silicon-based precursor fluid in pores of the carbon scaffold at 400 to 900°C.

15. The method of claim 13,
wherein the carbon structure is any one of a linear carbon structure, a planar carbon structure, a ball-type carbon structure, and a combination thereof.

16. The method of claim 13,
further comprising providing a coating layer on a surface of the carbon scaffold.

17. An anode, comprising:
an anode current collector; and
an anode active material layer comprising the anode active material according to any one of claims 1 to 12 and located on one surface or both surfaces of the anode current collector.
